# EUROPÄISCHE PATENTSCHRIFT

(11) **EP 0 711 797 B1**
(45) Veröffentlichungstag und Bekanntmachung des Hinweises auf die Patenterteilung: **14.04.1999**
(21) Anmeldenummer: 95116927.5
(22) Anmeldetag: 27.10.1995
(51) Int. Cl.: C08J 9/00, C08J 11/06, C08L 25/06

(54) **Verfahren zur Herstellung von Recyclat enthaltenden, expandierbaren Styrolpolymerisaten**
Process for preparation of expandable styrene polymer containing recycled material
Procédé de préparation des polymères de styrène expansible comprenant du matérial recyclé

(30) Priorität: 04.11.1994 DE 4439458
(43) Veröffentlichungstag der Anmeldung: 15.05.1996
(73) Patentinhaber: BASF AKTIENGESELLSCHAFT, 67056 Ludwigshafen (DE)
(72) Erfinder: Scherzer, Dietrich, Dr., D-67433 Neustadt (DE); Witt, Michael, Dr., D-67246 Dirmstein (DE); Hahn, Klaus, Dr., D-67281 Kirchheim (DE); Alicke, Gerhard, D-67549 Worms (DE); Dembek, Gerhard, Dr., D-67098 Bad Dürkheim (DE); Riethues, Michael, Dr., D-67071 Ludwigshafen (DE); Wolff, Bernardo, Dr., D-69115 Heidelberg (DE)

(56) Entgegenhaltungen:
- EP-A- 0 550 862
- EP-A- 0 584 612
- WO-A-92/07025
- DE-A- 1 520 790
- US-A- 3 344 212
- CHEMICAL ABSTRACTS, vol. 89, no. 24, 11.Dezember 1978 Columbus, Ohio, US; abstract no. 198489, & RO-A-60 004 (COMBINATUL PETROCHIMIC 'BORZESTI') 26.Februar 1976

## Beschreibung

Die Erfindung betrifft ein Verfahren zur Herstellung von Recyclat enthaltenden, expandierbare Styrolpolymerisaten, die zu Schäumen mit verbesserter Schaumstruktur verarbeitet werden können.

Kunststoffe, die auf Styrol und styrolhaltigen Copolymerisaten basieren, werden in großer Menge produziert und in vielen Bereichen der Technik eingesetzt. Eine große Bedeutung haben hierbei auch geschäumte Produkte.

Die Herstellung und Anwendung dieser Produkte ist seit langem bekannt und vielfach beschrieben.

Ein Problem, das in jüngerer Zeit besondere Bedeutung erlangte, ist das Recycling von Altkunststoffen.

Im Falle von Polystyrol und Polystyrolschaumstoffen sind hierbei verschiedene Verfahren bekannt.

So ist es möglich, das gebrauchte Polystyrol in monomerem Styrol zu lösen und diese Lösung nach bekanntem Verfahren wieder zu polymerisieren. Derartige Verfahren sind beispielsweise in US-A-5,269,948 oder JP-A-56-60096 beschrieben.

Eine weitere Möglichkeit besteht darin, Abfälle von Polystyrolschaumstoffen oder ungeschäumtem Polystyrol zur Extrusion von Polystyrolschaumstoffen einzusetzen.

Hierbei kann das Recyclat sowohl allein als auch im Gemisch mit frischem Polystyrol eingesetzt werden.

Die zu recyclierenden Polystyrolschaumstoffe sollten dabei vor der Verarbeitung verdichtet oder gemahlen werden. Das kann mechanisch, beispielsweise durch Pressen oder Mahlen, vorzugsweise jedoch durch Extrusion erfolgen.

Die Herstellung von Schäumen aus den Recyclaten kann dann wie üblich unmittelbar durch Begasung des Polymerisates im Extruder und anschließende Verschäumung zu Platten oder durch Extrusion zu expandierbarem Minigranulat. Es kann auch Minigranulat hergestellt werden, das in einer zweiten Verarbeitungsstufe mit Treibmittel imprägniert wird.

Nachteilig ist bei allen bekannten Methoden, daß die Schaumstruktur der unter Verwendung von Recyclat hergestellten geschäumten Styrolpolymerisate unbefriedigend ist. Die Zellen sind zumeist grob und ungleichmäßig, und es kommt zur Bildung von Lunkern.

Diese nachteiligen Effekte werden beispielsweise von Schmutzteilchen (oder Zusatzstoffen) verursacht, die sich im Recyclat befinden und sich auch durch Schmelzfiltration nicht vollständig entfernen lassen.

Außerdem macht sich bei der Verwendung von styrolhaltigen Copolymerisaten auch der Einfluß der anderen Polymerkomponenten störend bemerkbar.

Es hat in der Vergangenheit nicht an Versuchen gefehlt, diese störenden Effekte zu unterdrücken und Recyclat enthaltende expandierbare Styrolpolymerisate herzustellen, deren Schaumstruktur und mechanisches Niveau nicht hinter solchen aus frischem Polymerisat zurückstehen.

So wurden den Styrolpolymerisaten Keimbildner wie feinverteiltes Wasser oder Talkum zugegeben. Das führte zwar zu einer gleichmäßigeren Schaumstruktur, jedoch ist die Dosierung und die homogene Verteilung dieser anorganischen Komponenten schwierig. Zum anderen sind, insbesondere bei Einsatz von Wasser, Korrosionsprobleme bei der Extrusion nicht auszuschließen.

Aufgabe der Erfindung war es, Recyclat enthaltendes Polystyrol herzustellen, das zu Schäumen mit gleichmäßiger Schaumstruktur und guten mechanischen Eigenschaften verarbeitet werden kann sowie einfach herzustellen ist.

Die Aufgabe wurde überraschenderweise dadurch gelöst, daß den Recyclat enthaltenden expandierbaren Styrolpolymerisaten feinverteiltes Polyethylenwachs zugesetzt wird.

Gegenstand der Erfindung ist demnach ein Verfahren zur Herstellung von expandierbaren Styrolpolymerisaten, die 10 bis 100 Gew.-%, bezogen auf das Gesamtgewicht des Polystyrols, Polystyrol-Recyclat enthalten, wobei den Styrolpolymerisaten 0,01 bis 5 Gew.-% Polyethylenwachse in homogener Verteilung in der Schmelze zugesetzt werden.

Das feinverteilte Polyethylenwachs wird dem Recyclat enthaltenden Polystyrol in einer Menge von 0,01 bis 5 Gew.-%, vorzugsweise von 0,05 bis 0,5 Gew,-%, bezogen auf die Gesamtmenge an Polystyrol, zugesetzt.

Bei Zusatz von geringeren Mengen Polyethylenwachs ist die Wirkung zu gering, bei Zusatz größerer Mengen kann es zu Nachteilen bei den mechanischen Eigenschaften der resultierenden Schaumstoffe kommen.

Daß die Aufgabe der Erfindung durch die Zugabe von Polyethylenwachs gelöst werden konnte, war für den Fachmann nicht vorhersehbar. Zwar ist die Verwendung von Polyethylenwachs bei der Herstellung von Polystyrolschaumstoffen bekannt, doch erfolgte der Einsatz dieser Produkte, wie z. B. in GB-A-997 356 beschrieben, mit der Zielstellung der Kühlzeitverkürzung bei Partikelschaumstoffen.

Die erfindungsgemäß verwendeten Polyethylenwachse haben im allgemeinen ein mittleres Molgewicht (Zahlenmittel) von 2000 bis 6000, vorzugsweise von 2000 bis 4000 und besonders bevorzugt von 2800 bis 3500. Ein geeignetes Polyethylenwachs ist beispielsweise das von der BASF AG angebotene Luwax® mit einem mittleren Molgewicht (Zahlenmittel) von 3000. Die Polyethylenwachse eine haben vorzugsweise eine mittlere Teilchengröße von 5 bis 50 µm. Bei zu großen Teilchen gibt es Probleme mit der Verteilung im Polymerisat, bei zu feinen Produkten kann es zu Staubbelästigungen kommen.

Zweckmäßigerweise erfolgt der Zusatz des Polyethylenwachses in das geschmolzene Polystyrol.

Vorzugsweise wird dabei das Polyethylenwachs beim Extrudieren zum Polystyrol gegeben. Die Zugabe des Polyethylenwachses kann bei der Herstellung von Extruderschaum beim Verfahrensschritt der Extrusion vor der Verschäumung und bei der Herstellung von Polystyrol-Partikelschaum beim Verfahrensschritt der Extrusion bei der Herstellung des Minigranulates erfolgen. Das Polyethylenwachs kann zweckmäßigerweise am Einzug des Extruders gemeinsam mit dem Polystyrol, aber auch an jeder beliebigen Stelle des Extruders zugegeben werden.

Der zur Herstellung des Polystyrolrecyclats verwendete Polystyrolschaumstoff muß im allgemeinen verdichtet werden. Das kann mechanisch durch Pressen oder Mahlen des Polystyrolschaumstoff-Recyclats geschehen. Es ist jedoch auch möglich, das Polystyrolschaumstoff-Recyclat durch Extrudieren zu verdichten.

Zur Beseitigung von mechanischen, in der Schmelze nicht löslichen Verunreinigungen kann das aufgeschmolzene Polystyrolrecyclat vorteilhafterweise einer Schmelzfiltration unterworfen werden.

Die Recyclat enthaltenden, expandierbaren Styrolpolymerisate werden zur Verbesserung der Eigenschaften der resultierenden Schaumstoffe zweckmäßigerweise mit frischem Polystyrol gemischt. Diese Mischung erfolgt zumeist in der Schmelze in einem Extruder. Es ist jedoch prinzipiell auch möglich, das Recyclat allein wieder zu verschäumen.

Die Verschäumung erfolgt nach an sich bekannten Verfahren.

So ist es möglich, das aufgeschmolzene Polystyrol im Extruder zu begasen und direkt anschließend zu Platten zu verschäumen (Extruderschaumtechnologie).

Es ist jedoch auch möglich, das Polystyrol im Anschluß an die Extrusion zu granulieren, dieses Granulat mit Treibmittel zu imprägnieren und anschließend nach bekanntem Verfahren zu verschäumen (Partikelschaumtechnologie). Die Imprägnierung mit dem Treibmittel kann hierbei bereits im Extruder durchgeführt werden, wobei wobei die Schmelze schnell abgekühlt werden muß,um ein Aufschäumen der Teilchen zu verhindern (Kaltabschlag). Zumeist erfolgt die Imprägnierung der Teilchen jedoch in Suspension.

Dabei wird das Granulat in einer Flüssigkeit, zumeist Wasser, in Gegenwart der üblichen Hilfs- und Zusatzstoffe in einem Druckbehälter suspendiert, dieser inertisiert und auf eine Temperatur gebracht, die oberhalb des Erweichungspunktes, jedoch unterhalb des Schmelzpunktes des Polymeren liegt. Bei dieser Temperatur wird das Treibmittel aufgepreßt. Nach dem Abkühlen und Entspannen wird das imprägnierte Granulat abgetrennt, gereinigt und getrocknet, wobei das Trocknen vorzugsweise bei Temperaturen < 50°C in einem Luftstrom erfolgt.

Dieses Verfahren wird beispielsweise in EP-A-343 473 beschrieben.

Für die Herstellung von Schaumstoffen werden die expandierbaren Styrolpolymerisate in bekannter Weise durch Erhitzen auf Temperaturen oberhalb ihres Erweichungspunktes, beispielsweise mit Heißluft oder vorzugsweise mit Dampf, expandiert. Die erhaltenen Schaumstoffpartikel können nach dem Abkühlen und gegebenenfalls einer Zwischenlagerung durch erneutes Erhitzen weiter aufgeschäumt werden. Sie können abschließend in bekannter Weise in nicht gasdicht schließenden Formen zu Formteilen verschweißt werden.

Weitere Angaben zu den üblichen Imprägnier-, Extrusions- und Schäumverfahren finden sich beispielsweise im Kunststoffhandbuch, Band 5, Polystyrol, herausgegeben von R. Vieweg und G. Daumiller, Carl-Hanser-Verlag München, 1969.

Die Polystyrolschaumstoffe zeichnen sich gegenüber anderen Recyclat enthaltenden Polystyrolschaumstoffen durch eine gleichmäßigere Schaumstruktur aus. Auch geringe Verunreinigungen durch andere Polymere und Zusatzstoffe im Recyclat, die durch die üblichen Reinigungsverfahren wie Schmelzfiltration nicht aus dem Recyclat entfernt werden können, haben keine nachteiligen Auswirkungen auf die Schaumstruktur der erfindungsgemäßen Produkte.

Damit können auch außerhalb des eigentlichen Produktionsprozesses anfallende verschäumte und unverschäumte Polystyrolabfälle, die unterschiedliche Materialkennwerte und auch zum Teil unterschiedliche Zusatzstoffe aufweisen, nach einem sehr einfachen Verfahren wieder zu hochwertigen Schaumstoffen verarbeitet werden.

Die erfindungsgemäß verwendeten Polyethylenwachse sind gut zugänglich. Sie haben keinerlei nachteilige Auswirkungen auf die Eigenschaften und das Verarbeitungsverhalten der Schaumstoffe.

Außerdem wird der Molekulargewichtsabbau der Polystyrolrecyclate, gemessen als Viskositätszahl, deutlich vermindert, das Polymere wird also bei der Extrusion weniger geschädigt.

Die Erfindung soll an nachstehenden Beispielen näher erläutert werden:

### Beispiele 1 - 3 (Vergleich)

In einem Extruder ZSK 53 der Firma Werner und Pfleiderer wurde granuliertes Polystyrol-Recyclat (hergestellt mit einem EREMA-Extruder, unlösliche Anteile 0,12 Gew.-%, Viskositätszahl 65 ml/g), gegebenenfalls abgemischt mit reinem Polystyrol der Viskositätszahl 75 ml/g (Polystyrol VPT der BASF AG), extrudiert, dabei mit 5 Gew.-% Pentan begast und anschließend durch Unterwassergranulation auf eine Größe von.ca. 1,4x1,5 mm granuliert.

Das Granulat wurde mittels eines drucklosen Schäumkastens (System Rauscher) vorgeschäumt und nach 12 Stunden zu plattenförmigen Formteilen verarbeitet.

### Beispiele 4 - 12

Es wurde verfahren wir in den Beispielen 1 - 3 beschrieben, jedoch wurde beim Extrudieren ein Polyethylenwachs mit einem Molekulargewicht von ca. 3000, einer Partikelgröße von ca. 10 µm (Luwax® AF 31 der BASF AG) zugesetzt.

### Beispiele 13 - 15 (Vergleich)

Es wurde verfahren wie in den Beispielen 1 - 3, jedoch wurde das Treibmittel nicht im Extruder zugesetzt, sondern das Granulat mit einem Pickering-Stabilisator auf Basis von Magnesiumpyrophosphat in Wasser suspensiert, in einen mit Stickstoff inertisierten Druckkessel überführt, mit 7 Gew.-% Pentan imprägniert und wie in den Beispielen 1 - 3 beschrieben verschäumt.

### Beispiele 16 - 18

Es wurde verfahren wie in den Beispielen 13 - 15 beschrieben, jedoch wurde beim Extrudieren ein Polyethylenwachs mit einem Molekulargewicht von ca. 3000, einer Partikelgröße von ca. 10 µm (Luwax® AF 31 der BASF AG) zugesetzt.

Die genauen Mengenverhältnisse der Einsatzstoffe sowie die Eigenschaften der Schäume sind in Tabelle 1 zusammengestellt.

Die Bestimmung der Viskositätszahl (0,5 %ig in Toluol) erfolgte nach DIN 53 726, die der Schaumstruktur und der Zellzahl durch optische Begutachtung.

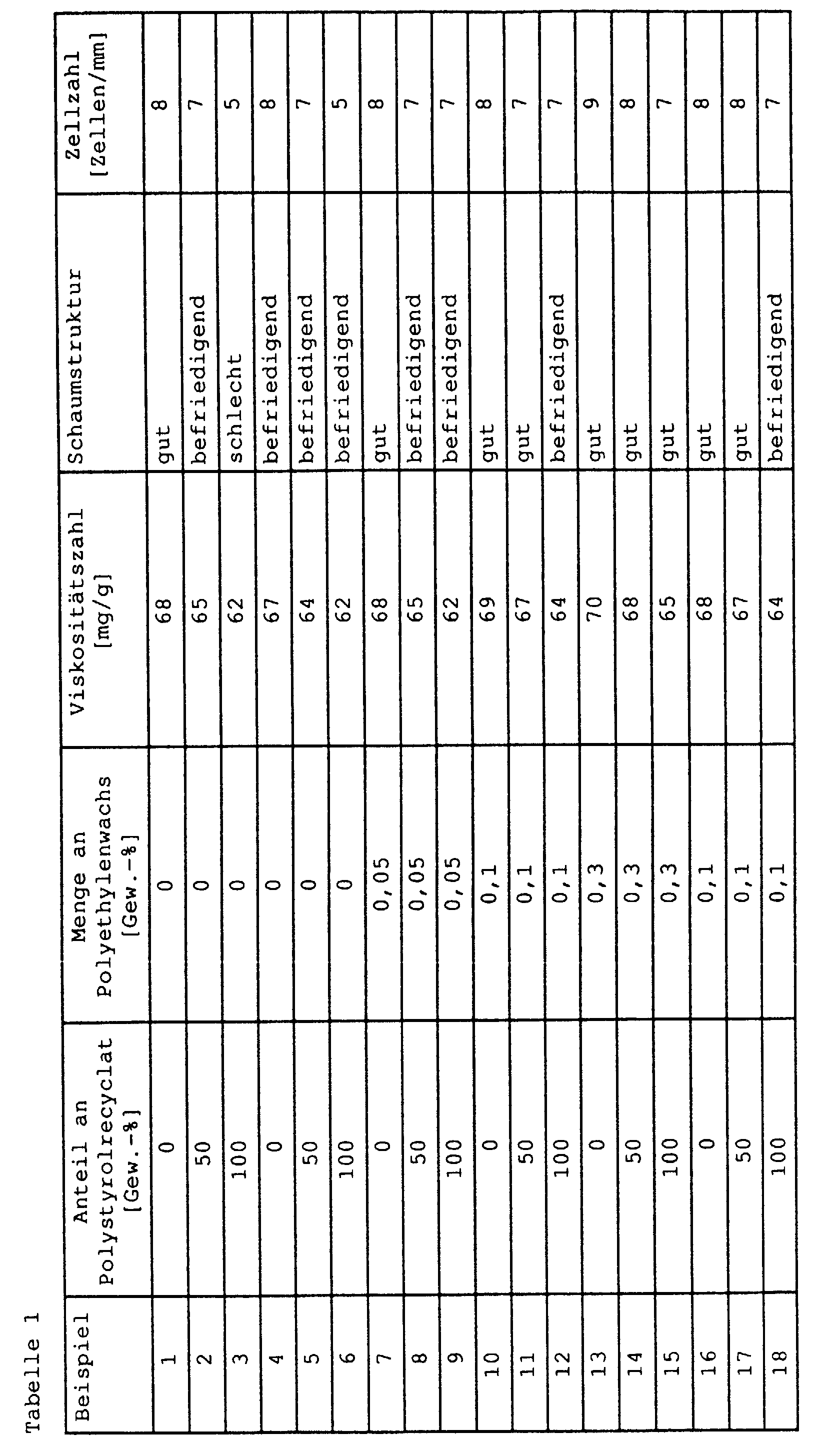

## Patentansprüche

1. Verfahren zur Herstellung von expandierbaren Styrolpolymerisaten, die 10 bis 100 Gew.-%, bezogen auf das Gesamtgewicht des Polystyrols, Polystyrol-Recyclat enthalten, dadurch gekennzeichnet, daß den Styrolpolymerisaten 0,01 bis 5 Gew.-% Polyethylenwachse in homogener Verteilung in der Schmelze zugesetzt werden.

2. Verfahren nach Anspruch 1, dadurch gekennzeichnet, daß die Polyethylenwachse den geschmolzenen Styrolpolymerisaten in einem Extruder zugesetzt werden.

3. Verfahren nach Anspruch 1, dadurch gekennzeichnet, daß die Polyethylenwachse eine mittlere Teilchengröße von 5 bis 50 µm aufweisen.

4. Verfahren nach Anspruch 1, dadurch gekennzeichnet, daß die Polyethylenwachse ein Molekulargewicht von 1000 bis 3000 aufweisen.

## Claims

1. A process for the preparation of an expandable styrene polymer comprising from 10 to 100% by weight, based on the total weight of the polystyrene, of recycled polystyrene, which comprises adding from 0.01 to 5% by weight of polyethylene wax in homogeneous distribution to the melt of the styrene polymer.

2. A process as claimed in claim 1, wherein the polyethylene wax is added to the molten styrene polymer in an extruder.

3. A process as claimed in claim 1, wherein the polyethylene wax has a mean particle size of from 5 to 50 µm.

4. A process as claimed in claim 1, wherein the polyethylene wax has a molecular weight of from 1000 to 3000.

## Revendications

1. Procédé pour la préparation de polymères de styrène expansibles qui contiennent un produit de recyclage de polystyrène à concurrence de 10 à 100% en poids rapportés au poids total du polystyrène, caractérisé en ce qu'on ajoute aux polymères de styrène, des cires de polyéthylène à concurrence de 0,01 à 5% en poids sous la forme d'une distribution homogène dans la masse fondue.

2. Procédé selon la revendication 1, caractérisé en ce qu'on ajoute les cires de polyéthylène aux polymères de styrène en fusion, dans une extrudeuse.

3. Procédé selon la revendication 1, caractérisé en ce que les cires de polyéthylène présentent une granulométrie moyenne de 5 à 50 µm.

4. Procédé selon la revendication 1, caractérisé en ce que les cires de polyéthylène présentent un poids moléculaire de 1.000 à 3.000.
